# EUROPEAN PATENT APPLICATION

(11) **EP 4 173 805 A1**
(43) Date of publication of application: **03.05.2023**
(21) Application number: 21461613.8
(22) Date of filing: 30.10.2021
(51) Int. Cl.: B29C 64/129, B29C 64/245, B29C 64/25, B29C 64/291, B29C 64/282

(54) **AN IMAGING MODULE FOR A UV LCD 3D PRINTER**

(71) Applicant: ZORTRAX S.A., 10-409 Olsztyn (PL)
(72) Inventor: Chendoszko, Artur, Olsztyn (PL); Urban, Krzysztof, Olsztyn (PL)
(74) Representative: Kancelaria Eupatent.pl Sp. z.o.o

(57) **Abstract**

An imaging module for a UV LCD 3D printer, the imaging module comprising: a housing (10); a frame (20) with a monochromatic LCD display (30) and with a glass pane (40) located under the monochromatic LCD display (30), wherein the frame (20) is located at an upper side of the housing (10); a uniform UV light source (50) located at a lower side of the housing (10), wherein light emitted by the uniform UV light source (50) is directed towards the monochromatic LCD display (30) through the glass pane (40); and a heat exchanger (60) attached to the uniform UV light source (50) and located outside the housing (10). The uniform UV light source (50) and the glass pane (40) are separated from each other by a distance H measuring from 100 to 120 mm. The glass pane (40) is made of fused quartz, fused silica or quartz glass. The housing (10) comprises at one side a ventilation inlet (11) with a filter (12) and, at an opposite side, a ventilation outlet (13) with a fan (14) for drawing air from an outside into the housing (10) through the ventilation inlet (11) with the filter (12) and across the housing (10) between the uniform light source (50) and the glass pane (40). The housing (10), the uniform UV light source (50), the frame (20) with the monochromatic LCD display (30) and the glass pane (40) are connected to each other in a tight manner such as to allow the air from the outside to be drawn into the housing (10) only through the ventilation inlet (11) with the filter (12).

## Description

### TECHNICAL FIELD

The disclosed invention relates to an imaging module for a UV LCD 3D printer.

### BACKGROUND

There are different known techniques for printing 3D objects, by an additive manufacturing process, for which different types of 3D printers are used.

One of common techniques is stereolithography (SLA). It uses a laser, preferably a UV laser, directed by galvanometers, to cure the resin. Galvanometers can be thought of as mirrors used to guide the laser beam through the transparent tank bottom to a particular point on the build platform.

Another known techniques is a digital light processing (DLP) in which the resin is cured with a digital projector instead of a laser. The projector projects images of whole layers onto the bottom of a vat. Light is selectively directed using a digital micromirror device (DMD), which is a component consisting of hundreds of thousands of tiny mirrors. Layers generated using DLP printers consist of so-called voxels, which are a 3D equivalent of pixels.

There is also known an LCD 3D printing technique which is similar to the DLP in that it also displays an entire layer of the printed object on the vat photopolymer. The key difference is that the UV light is emitted by an array of LEDs shining through a liquid crystal display (LCD), as opposed to the projector in the DLP. The LCD acts as a mask, revealing only the pixels necessary for the current layer. Therefore, no special device is required to direct the light, as is the case of both SLA and DLP techniques.

For example, a US patent US10328634B2 discloses an apparatus for forming three-dimensional objects by curing a photo-curing liquid polymer by exposure to a radiation wherein the radiation (e.g., at 410 nm) is provided by a collimated light source composed of an array of light emitting diode (LED) sources, an array of baffles, and an array of lenses. The baffles limit beam widths of each individual LED source in the array of LED sources, and the array of lenses is located one focal length from said array of LED sources. The lens arrangement is configured to receive the first beam of electromagnetic radiation, and project a second beam of electromagnetic radiation, wherein the second beam of electromagnetic radiation has substantially parallel light rays. In particular, the lens arrangement comprises a first lens configured to receive the first beam of electromagnetic radiation, and project an intermediate beam of electromagnetic radiation; and a second lens configured to receive the intermediate beam from the first lens, and project the second beam of electromagnetic radiation towards the photo-curing liquid polymer, through an LCD panel to produce an image. The LCD panel includes a plurality of addressable pixels, which can be made individually transparent or opaque to the incident radiation. The effect of the incident radiation passing through the transparent ones of the crystals in the matrix forms an image on the display surface.

A US patent US8815143B2 discloses a device and method for producing a three-dimensional object by solidifying a solidifiable material under an action of electromagnetic radiation by means of energy input via an imaging unit comprising a predetermined number of discrete imaging elements (pixels). The energy input related to a specific cross-sectional area of the three-dimensional object is controlled by exposure by means of multiple successive raster masks (bitmaps, e.g. bitmap 1 and bitmap 2 and possibly additional ones). The imaging unit is suitably controllable such that at least two masks can be generated, including a first overall mask covering the cross-sectional area (bitmap 1; with pixel-specific area elements exposing in white light) and a partial mask (bitmap 2; in which only a fraction of the area elements is exposed pixel-specifically with white light) within the overall mask. A voxel matrix may be formed. A hardness depth per voxel (volume pixel) can be specifically and precisely influenced in the solidifiable material.

A US patent US8114569B2 discloses a process for curing photopolymer which comprises exposing the photopolymer to an image produced by a mask-free imaging apparatus. The image may be generated by a monochromatic display, e.g. a liquid crystal display, light emitting diodes, a cathode ray tube or plasma display.

### SUMMARY OF THE INVENTION

There is a need to further improve the technology of UV LCD 3D printing to improve the quality of the printed objects.

The invention relates to an imaging module for a UV LCD 3D printer, the imaging module comprising: a housing; a frame with a monochromatic LCD display and with a glass pane located under the monochromatic LCD display, wherein the frame is located at an upper side of the housing; a uniform UV light source located at a lower side of the housing, wherein light emitted by the uniform UV light source is directed towards the monochromatic LCD display through the glass pane; and a heat exchanger attached to the uniform UV light source and located outside the housing. The uniform UV light source and the glass pane are separated from each other by a distance H measuring from 100 to 120 mm. The glass pane is made of fused quartz, fused silica or quartz glass. The housing comprises at one side a ventilation inlet with a filter and, at an opposite side, a ventilation outlet with a fan for drawing air from an outside into the housing through the ventilation inlet with the filter and across the housing between the uniform light source and the glass pane. The housing, the uniform UV light source, the frame with the monochromatic LCD display and the glass pane are connected to each other in a tight manner such as to allow the air from the outside to be drawn into the housing only through the ventilation inlet with the filter.

The imaging module is intended for use with UV LCD 3D printers in which consecutive layers are illuminated at once at the bottom of a resin vat with the UV light emitted from the uniform UV light source, wherein the light beams are passing through the monochromatic LCD display which acts as a mask, revealing only the pixels necessary for curing the current layer. In other words, the LCD display is transparent for the light beams only in the regions where the pixels of the display are active.

The selected distance H between the uniform UV light source and the glass pane allows achieving uniform light distribution on the surface of the monochromatic LCD display.

Preferably, the uniform UV light source emits the light with a wavelength from 365 to 420 nm.

The glass pane refracts the light rays n1 emitted from the uniform UV light source to achieve perpendicularity of the rays n2 in relation to the monochromatic LCD display, thereby improving the accuracy of detail reproduction by eliminating UV glow outside the area of active pixels of a monochromatic display. Use of fused quartz, fused silica or quartz glass for the glass pane guarantees a preferable light diffraction coefficient. The type of glass used can be selected depending on the expected optical properties related to the distance between the UV light source and a focusing/scattering angle of the collimators. The glass pane made of quartz glass is particularly effective in comparison to other glass types (such as e.g. borosilicate glass), as it provides better optical properties concerning the light diffraction coefficient.

The monochromatic display allows for greater efficiency of light power because a single pixel consists of only one cell (and not three RGB cells, as is the case with colour displays, where only the blue one transmits the UV band). A smaller number of real cells also enables a higher display refresh rate by increasing the exposure of the resin to UV light in the active pixel point over time.

The heat exchanger transfers heat from the uniform UV light source outside the imaging module. Depending on the amount of heat generated by the uniform UV light source, the heat exchanger may have a form of a radiator which is cooled down by air or may have a form of a heat exchanging unit which is cooled down by liquid such as water.

The imaging module may be further equipped with a controller and a temperature sensor for controlling the speed of the fan according to the actual temperature inside the imaging module.

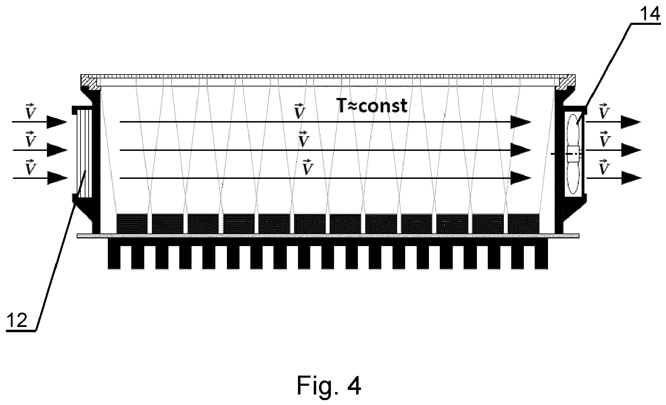

The airtight assembly of the elements of the imaging module together with the filter and the fan protect the interior against contaminations such as dust coming from the external environment and allow maintaining constant temperature of the optics of the imaging module. Maintaining the constant temperature of the imaging module allows keeping the optical properties of the elements of the module, in particular the uniform UV light source and the glass pane, constant. In turn, constant optical properties of the glass pane and the uniform UV light source allow keeping constant refraction angles of light passing through one medium which is air to another medium which is glass. The fan causes the air to flow across the imaging module as presented in Fig. 4.

The uniform UV light source may comprise UV LEDs, each equipped with a collimator.

The collimators focus the light beams from the UV LEDs onto the monochromatic LCD display to achieve high irradiation power per 1 cm². The UV LEDs can be arranged as an array.

The glass pane may have a thickness from 2 to 6 mm.

The invention also relates to a UV LCD 3D printer comprising the imaging module as described herein.

These and other features, aspects and advantages of the invention will become better understood with reference to the following drawings, descriptions and claims.

### BRIEF DESCRIPTION OF DRAWINGS

The disclosed invention is shown by means of preferred embodiments in a drawing, wherein:
Fig. 1 presents schematically an imaging module for a UV LCD 3D printer in an exploded view;
Fig. 2 presents schematically the uniformity and intensity of light beams inside the imaging module for the UV LCD 3D printer in a cross-section view;
Fig. 3 presents schematically propagation of light in the imaging module;
Fig. 4 presents schematically air flow through the imaging module;
Figs. 5A-5D present consecutive steps of a 3D printing process;
Fig. 6 presents the UV LCD 3D printer with the imaging module.

### DETAILED DESCRIPTION OF EMBODIMENTS

The following detailed description is of the best currently contemplated modes of carrying out the invention. The description is not to be taken in a limiting sense, but is made merely for the purpose of illustrating the general principles of the invention.

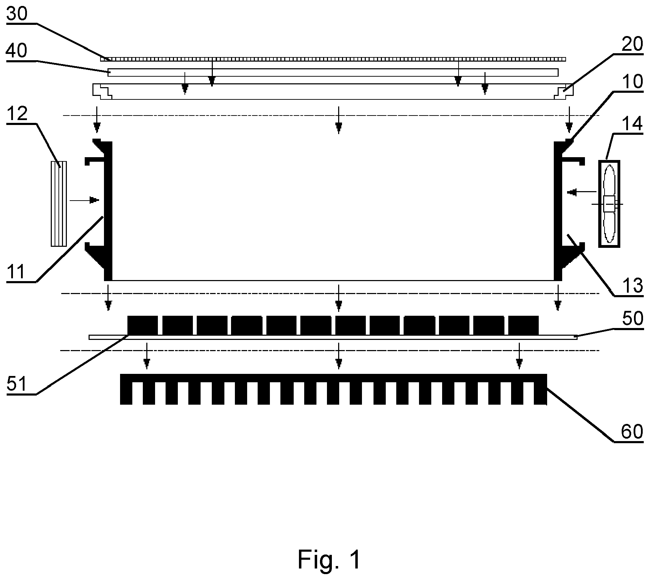

The imaging module is shown by means of an example embodiment in Fig. 1 in an exploded view showing assembly of components of the module, and in Figs. 1-4 in an assembled state. The imaging module has a housing 10.

At an upper side of the housing 10, a frame 20 is located, wherein the frame 20 surrounds a monochromatic LCD display 30 and a glass pane 40 located under the monochromatic LCD display 30. The glass pane 40 can be made of fused quartz, fused silica or quartz glass.

At a lower side of the housing, a uniform UV light source 50 is located, such that wherein light emitted by the uniform UV light source 50 is directed towards the monochromatic LCD display 30 through the glass pane 40.

Furthermore, a heat exchanger 60 in a form of radiator is attached to the uniform UV light source 50 to transfer heat from the uniform UV light source 50 outside the imaging module.

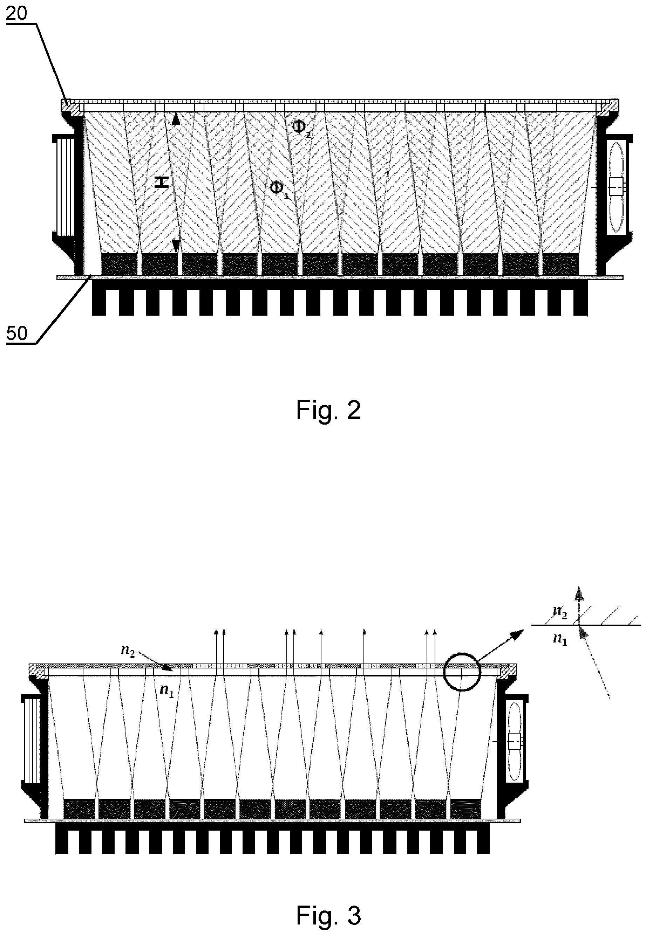

The uniform UV light source 50 comprises an array of UV LEDs, each equipped with a collimator 51 that focuses the light beams from the UV LEDs onto the monochromatic LCD display, as shown in Fig. 2.

The uniform UV light source 50 and the glass pane 40 are separated from each other by a distance H measuring from 100 to 120 mm.

As shown in Fig. 3, the glass pane 40 refracts the light rays n1 emitted from the uniform UV light source 50 to achieve substantial perpendicularity of the rays n2 in relation to the monochromatic LCD display 30.

At one side of the housing 10 there is a ventilation inlet 11 with a filter 12 located outside the housing adjacently to the ventilation inlet, such that all air getting into the housing is filtered. At an opposite side of the housing there is a ventilation outlet 13 with a fan 14. The fan is configured to draw air out from the housing, such that air is directed from an outside into the housing 10 through the ventilation inlet 11 with the filter 12, passes across the housing 10 between the uniform light source 50 and the glass pane 40 and exits via the ventilation outlet 13, as shown in Fig. 4. Thereby, the temperature inside the housing 10 is kept at a substantially constant level close to the ambient air temperature.

The housing 10, apart from the ventilation inlet 11 and the ventilation outlet 13 is airtight, i.e. the uniform UV light source 50, the frame 20 with the monochromatic LCD display 30 and the glass pane 40 are connected to each other and to the housing 10 such as to allow the air from the outside to be drawn by the fan 14 into the housing 10 only through the ventilation inlet 11 with the filter 12.

The speed of the fan 14 can be controlled according to an actual temperature inside the imaging module measured with a temperature sensor.

In an embodiment, the glass pane 40 is made of a fused silica glass (having a complex refractive index n≈1,45) having a thickness of 4 mm. The uniform UV light source 50 contains an array of 7 x 10 LEDs, each having a power of 3W and emitting light of a wavelength peak at 405 nm. The distance H between the uniform UV light source and the glass pane 40 is 110 mm.

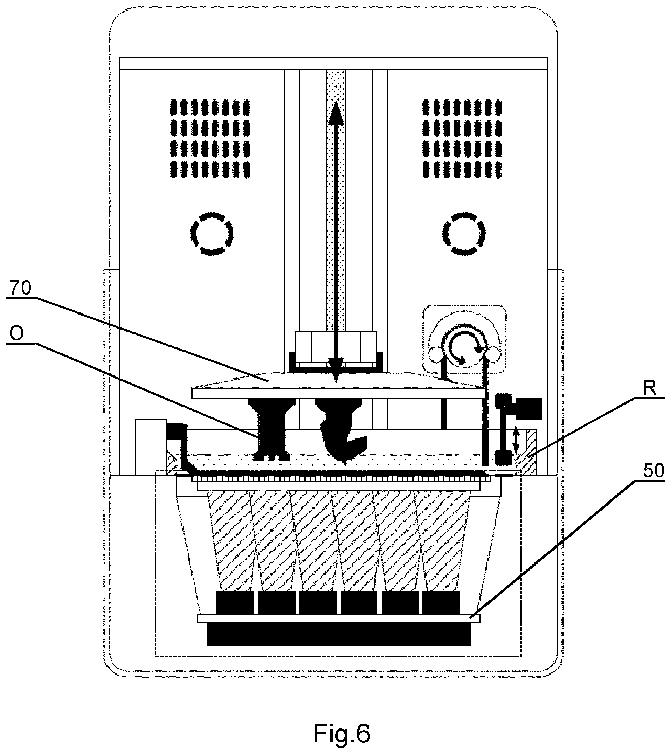

Fig. 6 presents a UV LCD 3D printer with the imaging module as described above. A resin vat R is placed on top of the imaging module, over the monochromatic display 40. A platform 70 holds the object that is erected. A flexible membrane 71 is located at the bottom of the resin vat R.

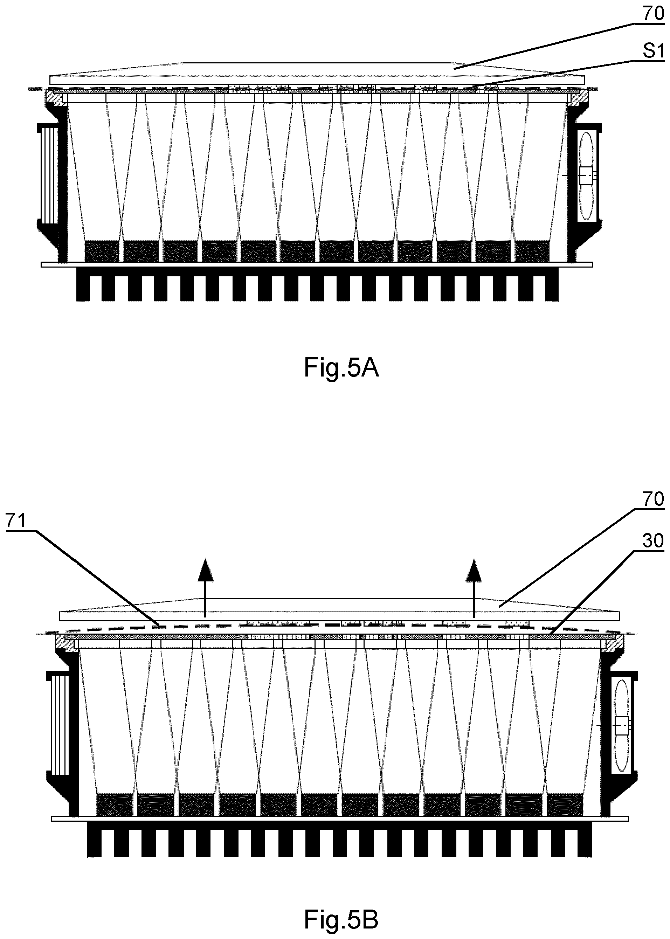

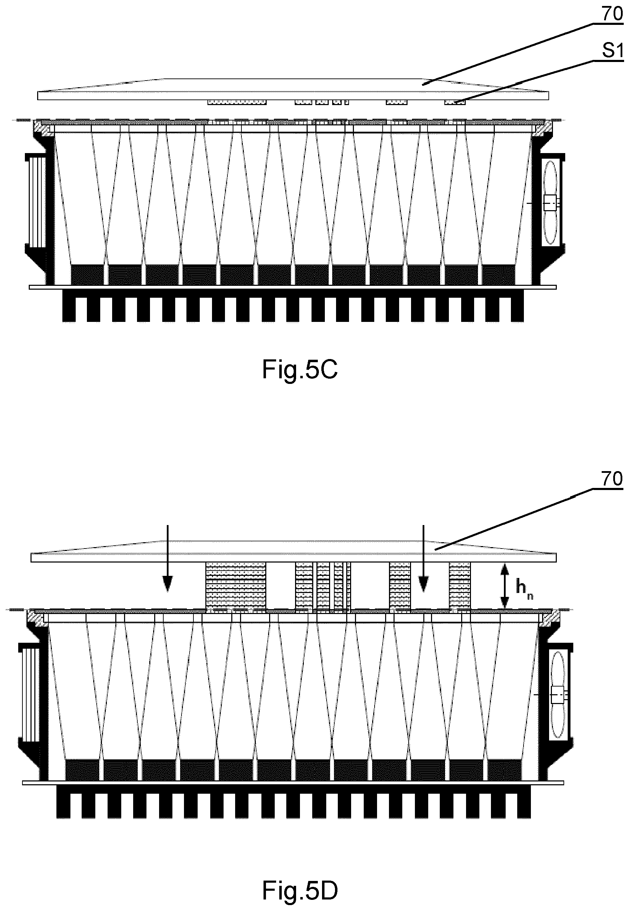

Figs. 5A-5D present consecutive steps of a 3D printing process that involves use of the imaging module as presented herein. Fig. 5A presents a first step in which a first section S1 of an object O is erected by illuminating the first layer of resin in the vat R. Next, Fig. 5B presents the step of rising of the platform 70 to which the first section S1 of the object O is attached. When rising the platform 70, the flexible membrane 71 is deformed until it detaches from the object and returns to its initial position (Fig. 5C), which is parallel to the monochromatic LCD display 30. Next the platform 70 is lowered until the first already erected section S1 touches the flexible membrane 71. Subsequently next layer of the object may be erected. Fig. 5D presents a situation in which a plurality of sections (Sn) of the object O are already erected and the object has a height hₙ. The flexible membrane 71 is transparent for the UV light and is made of a hydrophobic material with low adhesion. During lifting of the object, the flexible membrane 71 deforms into an arc which decreases the force needed to detach the newly printed section of the object from the flexible membrane 71.

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. An imaging module for a UV LCD 3D printer, the imaging module comprising:
- a housing (10);
- a frame (20) with a monochromatic LCD display (30) and with a glass pane (40) located under the monochromatic LCD display (30), wherein the frame (20) is located at an upper side of the housing (10);
- a uniform UV light source (50) located at a lower side of the housing (10), wherein light emitted by the uniform UV light source (50) is directed towards the monochromatic LCD display (30) through the glass pane (40); and
- a heat exchanger (60) attached to the uniform UV light source (50) and located outside the housing (10);
**characterized in that**:
- the uniform UV light source (50) and the glass pane (40) are separated from each other by a distance H measuring from 100 to 120 mm;
- the glass pane (40) is made of fused quartz, fused silica or quartz glass;
- the housing (10) comprises at one side a ventilation inlet (11) with a filter (12) and, at an opposite side, a ventilation outlet (13) with a fan (14) for drawing air from an outside into the housing (10) through the ventilation inlet (11) with the filter (12) and across the housing (10) between the uniform light source (50) and the glass pane (40);
- wherein the housing (10), the uniform UV light source (50), the frame (20) with the monochromatic LCD display (30) and the glass pane (40) are connected to each other in a tight manner such as to allow the air from the outside to be drawn into the housing (10) only through the ventilation inlet (11) with the filter (12).

2. The imaging module according to claim 1, wherein the uniform UV light source (50) comprises UV LEDs, each equipped with a collimator (51).

3. The imaging module according to claim 1 or 2, wherein the glass pane (40) has a thickness from 2 to 6 mm.

4. A UV LCD 3D printer comprising the imaging module according to any of previous claims.
